# EUROPEAN PATENT APPLICATION

(11) **EP 3 587 868 A1**
(43) Date of publication of application: **01.01.2020**
(21) Application number: 18756587.4
(22) Date of filing: 21.02.2018
(51) Int. Cl.: F16J 15/40, F04D 29/12, F16J 15/44

(54) **SEAL DEVICE**

(30) Priority: 22.02.2017 JP 2017030769
(71) Applicant: Eagle Industry Co., Ltd., Minato-ku Tokyo 105-8587 (JP)
(72) Inventor: TOKUNAGA Yuichiro, Tokyo 105-8587 (JP); INOUE Hideyuki, Tokyo 105-8587 (JP); KIMURA Wataru, Tokyo 105-8587 (JP); IGUCHI Tetsuya, Tokyo 105-8587 (JP); KASAHARA Hidetoshi, Tokyo 105-8587 (JP); HIROMATSU Jun, Tokyo 105-8587 (JP); KUROKI Yasuhiro, Tokyo 105-8587 (JP); KIKUCHI Ryu, Tokyo 105-8587 (JP)
(74) Representative: TBK
(86) International application number: PCT/JP2018/006095
(87) International publication number: WO 2018/155464

(57) **Abstract**

The present invention provides a seal device in which a floating ring exhibits a sealing action by following the movement of a rotating shaft and can damp vibration of the rotating shaft.

A seal device 10 for sealing between a housing 11 and a rotating shaft 20 which penetrates through the housing 11 includes a floating ring 15 arranged on the rotating shaft 20 with a gap h therebetween, and is provided with a spiral foil 14 arranged between the floating ring 15 and the housing 11.

## Description

### Technical Field

The present invention relates to a seal device for sealing between a housing and a rotating shaft which penetrates through the housing, and, particularly, relates to a seal device provided with a floating ring used for the rotating shaft of a fluid machine such as a pump.

### Background Art

Conventionally, in a rotating fluid machine such as a pump, a floating seal is used for sealing a fluid, and, for example, the one shown in FIG. 3 is known (Hereinafter, referred to as "a conventional art 1". For example, see Patent Document 1.) . The conventional art is provided with a rotating shaft 45 of a fluid machine, a sleeve 44 attached to the outer periphery of the rotating shaft 45 and rotating integrally with the rotating shaft, a seal ring 41 loosely fitted with a clearance to the sleeve 44, leaf springs 46 provided at four places on the outer circumference of the seal ring 41, and a retainer 42 for storing the seal ring 41, and the seal ring 41 is supported by the leaf springs 46 in a state that projections 46A of the leaf springs 46 are engaged with grooves 42A provided in the retainer 42. Then, by a wedge effect (an effect of dynamic pressure generated in a wedge part) and a Lomakin effect (when seal differential pressure occurs, an aligning effect due to flow loss of a fluid between a seal ring and a shaft) generated between an inner circumferential surface of the seal ring 41 and the sleeve 44 of the rotating shaft 45, a gap between the inner circumferential surface of the seal ring 41 and the rotating shaft 45 is maintained constant, and the seal ring 41 is pushed axially to the retainer 42 side from a high-pressure fluid side and the seal ring 41 and the retainer 42 are sealed. Moreover, the seal ring 41 has a whirl-stop pin 43, the whirl-stop pin 43 is inserted in a hole 49 of the retainer, and the movement in the rotational direction of the seal ring 41 with respect to the retainer 42 is restricted.

### CITATION LIST

### PATENT DOCUMENTS

Patent Document 1: JP 57-154562 A

### SUMMARY OF THE INVENTION

### Problem to be Solved by the Invention

In Patent Document 1, the seal ring 41 is elastically supported to the retainer 42 via the leaf spring 46. However, only the leaf spring 46 cannot obtain adequate damping force. Therefore, if the rotating shaft 45 whirls largely, the whirl-stop pin 43 attached to the seal ring 41 impulsively contacts a wall surface of the hole 49 of the retainer, and when operated for a long time, surface roughness is generated on a surface of the whirl-stop pin 43 and the wall surface of the retainer hole 49, so there is a fear that the whirl-stop pin 43 cannot move smoothly with respect to the retainer hole 49. As a result, the seal ring 41 is restrained in the retainer 42, and the seal ring 41 cannot follow the movement of the rotating shaft 45, so the rotating shaft and the seal ring may be damaged by contact thereof, and the radial gap may become larger than an optimum value, therefore there was a fear that proper sealing action cannot be obtained.

In order to solve the above problem, it is conceivable that by providing a radial elastic support means and a circumferential elastic support means, the seal ring 41 is supported in both directions, but there is also a problem that since a seal device becomes complicated and oversized, it becomes difficult to incorporate the seal device into the other rotating fluid machine.

The present invention has been made in view of such problems, and an object thereof is to provide a seal device in which a floating ring exhibit a sealing action by following the movement of a rotating shaft and can dump vibrations in the circumferential direction and the radial direction of the rotating shaft.

### Means for Solving Problem

In order to solve the problem, a seal device according to a first aspect of the present invention is a seal device for sealing between a housing and a rotating shaft which penetrates through the housing, and the seal device is characterized by
including a floating ring arranged on the rotating shaft with a gap therebetween, and
being provided with a spiral foil arranged between the floating ring and the housing.

According to the first aspect, the spiral foil functions as a squeeze film damper and generates a vibration damping force, and can generate a biasing force and a damping force in the radial direction and the circumferential direction by its own elastic restoring force. Thereby, even if the rotating shaft whirls, the floating ring can reduce vibration of the rotating shaft by receiving a biasing force in the radial direction and the circumferential direction from the spiral foil, and thus can exhibit sealing properties while maintaining a proper gap with respect to the rotating shaft.

The seal device according to a second aspect of the present invention is characterized in that the spiral foil is formed into a multilayer.

According to the second aspect, by forming the spiral foil into a multilayer, it is possible to increase the vibration damping force of the squeeze damper film.

The seal device according to a third aspect of the present invention is characterized in that a thickness of the spiral foil is less than or equal to 0.5 mm.

According to the third aspect, it is possible to configure a seal device with a vibration damping function to be simple and compact.

### BRIEF DESCRIPTION OF THE DRAWINGS

FIG. 1 is a front cross-sectional view of a seal device according to an embodiment of the present invention.
FIG. 2 is a schematic view of an A-A cross-sectional view (a side cross-sectional view) of FIG. 1, and is a drawing illustrating the function of a spiral foil.

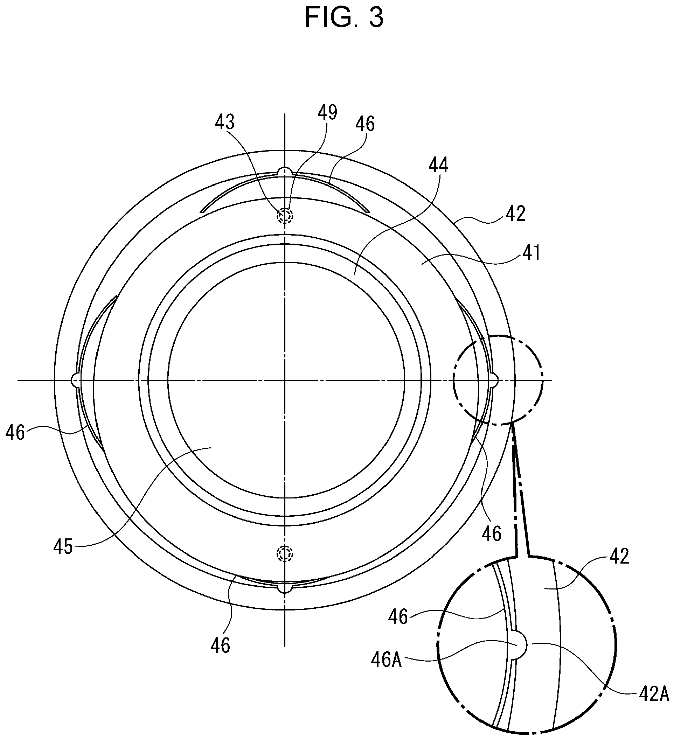

FIG. 3 is a side cross-sectional view of a conventional seal device.

### DESCRIPTION OF EMBODIMENTS

Although an embodiment of a seal device according to the present invention will be described in detail with reference to the drawings, the present invention shall not be interpreted as being limited thereto, and a variety of changes, amendments, or improvements could be added based on the knowledge of a person skilled in the art without departing from the scope of the present invention.

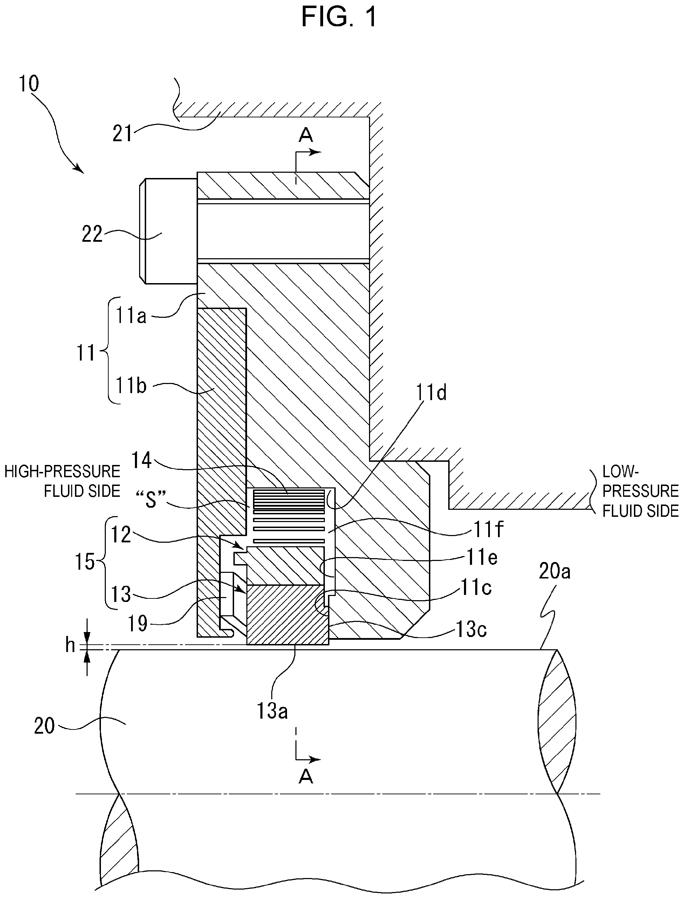

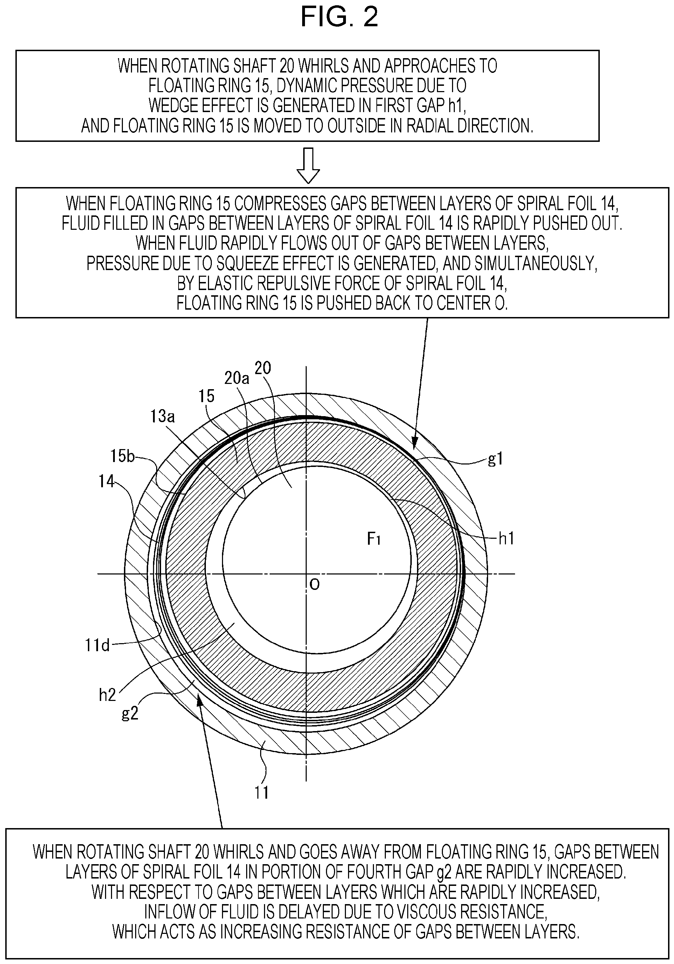

A seal device 10 according to an embodiment of the present invention will be described with reference to FIG. 1 and FIG. 2. A rotating shaft 20 of a fluid machine is arranged so as to penetrate through a casing 21, and the left side is considered as a high-pressure side, while the right side is considered as a low-pressure side. The seal device 10 is mainly composed of a floating ring 15 disposed on the outer circumference of the rotating shaft 20 with a radial gap h therebetween, a housing 11 for storing the floating ring 15, and a spiral foil 14 arranged between the floating ring 15 and the housing 11.

The housing 11 is mainly formed of a holder 11a and a flange 11b, and the holder 11a is fixed to the casing 21 by a fastening means 22. The holder 11a and the flange 11b each has a predetermined gap with the rotating shaft 20 and has a hole through which the rotating shaft 20 penetrates. On the inner diameter side of the holder 11a, there is a storage part 11f surrounded by circular inner circumferential wall 11d and radial wall 11e when viewed in an axial direction. Then, in a space S surrounded by the inner circumferential wall 11d of the housing 11, the radial wall 11e and the flange 11b each of which partitions the axial direction of the inner circumferential wall 11d, and the rotating shaft 20 which penetrates through the housing 11, the floating ring 15 and the spiral foil 14 are stored. Further, the radial wall 11e has, on the inner diameter side thereof, a holder side secondary sealing surface 11c slightly protruding in the axial direction from the radial wall 11e, and the holder side secondary sealing surface 11c and a seal ring side secondary sealing surface 13c (described later) are adhered to form a secondary seal as a sealing means.

The floating ring 15 is mainly composed of a seal ring 13, and a retainer 12 fitted to the outer circumference of the seal ring 13.

The seal ring 13 is a circular ring shaped member having a generally rectangular cross-section, and is made up of a material with good sliding property, such as carbon. An inner circumferential surface 13a of the seal ring 13 is formed into a cylindrical surface having the minute radial gap h with respect to an outer circumferential surface 20a of the rotating shaft 20.

The retainer 12 is an annular member having a generally rectangular cross-section made up of metals, plastics, synthetic resins, and the like. Stainless, steel, copper, aluminum, and the like are used as metals. Moreover, by adopting those with good sliding property among plastics and synthetic resins, it is possible to reduce frictional resistance with the spiral foil. Further, by adopting FRP and the like reinforced with carbon fiber or glass fiber, it is possible to improve wear resistance. The outer circumference of the retainer 12 is a cylindrical surface formed into same diameter. Moreover, the retainer 12 is interference-fitted to the outer circumference of the seal ring 13, thereby applying a compressive force to the seal ring 13. Thereby, even if the seal ring 13 is made up of a brittle material such as carbon, breakage of the seal ring 13 due to contact with the rotating shaft 20, and the like can be prevented.

The spiral foil 14 is formed by molding, into a spiral shape, a thin plate which is easily deformed and has elasticity recoverable to an original shape. The spiral foil 14 is formed into a multilayer provided with gaps, and in a natural state, the outer diameter thereof is larger than the inner circumferential wall 11d of the housing 11, and the inner diameter thereof is smaller than the outer diameter of the floating ring. Moreover, in a state that the spiral foil 14 is attached between the housing 11 and the floating ring 15, the gaps between the respective layers of the spiral foil 14 are formed so as to be wider on the inner diameter side and be gradually narrower toward the outer diameter side. Thereby, it is possible to efficiently apply a damping force to the rotating shaft 20. The spiral foil 14 has a wall thickness not exceeding 0.5 mm, and preferably of 0.02 mm to 0.1 mm. The spiral foil 14 is made up of a material having a high yield point, such as spring steel or a phosphor bronze plate. The foil thickness, the width, and the number of layers of the spiral foil 14 are adjusted so as to match a required value of restoring forces in the radial direction and the circumferential direction. Moreover, each layer of the spiral foil 14 may be subjected to low friction resin coating in order to reduce frictional resistance when they contact with each other. Moreover, in order to improve wear resistance of each layer of the spiral foil 14, diamond-like carbon or ceramics coating may be applied thereto.

The floating ring 15 disposed on the outer circumference of the rotating shaft 20 which penetrates through the housing 11 is inserted in the storage part 11f of the housing 11. Then, the spiral foil 14 is increased in the inner diameter and decreased in the outer diameter, and is attached between an outer circumference 15b of the floating ring 15 and the inner circumferential wall 11d of the housing 11. The spiral foil 14 generates a pressing force with respect to the outer circumference 15b of the floating ring 15 and the inner circumferential wall 11d of the housing 11, and is fixed in the circumferential direction by a frictional force due to the pressing force.

Further, the spiral foil 14 is stored in the space S by being surrounded by the flange 11b via the biasing means 19. As to the floating ring 15, by a biasing means 19 such as a spring, the seal ring side secondary sealing surface 13c and the holder side secondary sealing surface 11c are adhered, thereby sealing between the seal ring 13 and the holder 11a. Since the seal ring 13 made up of a material with good sliding property contacts the biasing means 19 and the holder side secondary sealing surface 11c, the floating ring 15 can prevent the fixing to the biasing means 19 and the holder 11a, and the movement of the floating ring 15 is not restrained. Hereinafter, a sealing means by adhesion between the seal ring side secondary sealing surface 13c and the holder side secondary sealing surface 11c will be described as a secondary seal.

The operation of the seal device 10 as thus constituted will be described.

During stop of the rotating shaft 20, by a radial elastic repulsive force of the spiral foil 14, the floating ring 15 is eccentric to the rotating shaft 20, and the radial gap h may be non-uniform. However, when the rotating shaft 20 rotates, the fluid is drawn by the viscosity of the fluid into a tapered portion on the upper side where the gap is small, and dynamic pressure due to a wedge effect is generated, so the floating ring 15 floats above the rotating shaft 20, and is aligned such that the radial gap h is formed.

Next, the operation of the seal device 10 when the rotating shaft 20 whirls largely due to vibration will be described with reference to FIG. 2. In FIG. 2, the rotating shaft 20 rotates, and the inner circumferential wall 11d of the housing 11 stands still. Moreover, one end of the spiral foil 14 and the other end thereof are fixed respectively to the floating ring 15 and the inner circumferential wall 11d of the housing 11 so as to hardly move, but the spiral foil 14 can be moved in the radial direction and the circumferential direction within a deformation range of the floating ring 15 and the spiral foil 14. Moreover, the space S and the gaps between the respective layers of the spiral foil 14 are filled with a high-pressure fluid to be sealed. In addition, a portion where the rotating shaft 20 is closest to the inner circumferential surface 13a of the floating ring 15 will be described as a first gap h1, a portion where the outer circumferential surface 13b of the floating ring 15 is closest to the inner circumferential wall 11d of the housing 11 will be described as a second gap g1, a portion where the rotating shaft 20 is farthest from the inner circumferential surface 13a of the floating ring 15 will be described as a third gap h2, and a portion where the outer circumferential surface 13b of the floating ring 15 is farthest from the inner circumferential wall 11d of the housing 11 will be described as a fourth gap g2.

When the rotating shaft 20 whirls and approaches to the inner circumferential surface 13a of the floating ring 15, dynamic pressure due to a wedge effect is generated in the first gap h1, and the floating ring 15 is moved to the outside in a radial direction. When the floating ring 15 is moved to the outside in the radial direction, the gaps between the layers of the spiral foil 14 are compressed between the floating ring 15 and the housing 11. When the gaps between the foils are compressed, the fluid is rapidly pushed out of the gaps between the layers, and pressure due to a squeeze effect is generated between the spiral foils and acts as a reducing resistance of the gaps between the layers. Moreover, the gaps between the layers of the spiral foil 14 tend to be increased in the fourth gap g2 on the opposite side to the first gap h1, but due to the influence of the viscosity of the fluid, the speed at which the fluid flows into the gaps is slower than the speed at which the gaps are increased, which acts as an increasing resistance of the gaps between the layers.

Like this, in a portion where the size of the gaps between the layers of the spiral foil 14 is rapidly reduced, due to the influence of the viscosity of the fluid, the speed at which the fluid flows out of the gaps is slower than the speed at which the gaps are reduced, which acts as a reducing resistance (a squeeze effect) of the gaps between the layers. On the other hand, in a portion where the size of the gaps between the layers of the spiral foil 14 is rapidly increased, due to the influence of the viscosity of the fluid, the speed at which the fluid flows into the gaps is slower than the speed at which the gaps are increased, which acts as an increasing resistance of the gaps between the layers. These reducing resistance and increasing resistance are proportional to the speeds of the fluid flows in and out of the gaps between the layers, and act as damping forces of vibration. That is, over almost the whole circumference of the spiral foil 14, a force for damping whirl of the floating ring 15 can be generated. In addition, the larger the number of the layers of the spiral foil 14, the larger the damping force can be.

Further, when the floating ring 15 whirls due to whirl of the rotating shaft 20, the spiral foil 14 itself tends to be largely deformed in the radial direction and the circumferential direction, but elastic restoring forces in the radial direction and the circumferential direction of the spiral foil 14 act such that whirl of the floating ring 15 is restricted. In this manner, the floating ring 15 is returned toward the center O of the housing 11 by the elastic restoring force of the spiral foil 14 itself, so whirl of the rotating shaft 20 also can be reduced via the floating ring 15.

The present invention exhibits the following excellent effects.

Even if the radial gap h between the outer circumferential surface 20a of the rotating shaft 20 and the inner circumferential surface 13a of the floating ring is non-uniform, when the rotating shaft 20 rotates, dynamic pressure due to a wedge effect is generated in a portion where the gap is narrow, so the floating ring 15 floats above the rotating shaft 20, and is aligned such that the radial gap h is equal. Moreover, the seal ring 13 is made up of a material such as carbon with good sliding property, so wear of the seal ring 13 can be prevented, and the radial gap h can be maintained, and therefore a favorable sealed state can be obtained.

Even if the rotating shaft 20 whirls, over almost the whole circumference of the spiral foil 14, a force for damping whirl of the floating ring 15 can be generated, so vibration of the rotating shaft 20 can be damped. Moreover, even if the floating ring 15 whirls in association with whirl of the rotating shaft 20, the movement in the radial direction and the circumferential direction is reduced by an elastic restoring force of the spiral foil 14. In this manner, by a vibration damping force and an elastic restoring force, the spiral foil 14 reduces vibrations in the radial direction and the circumferential direction of the floating ring 15 and can also reduce vibration of the rotating shaft 20.

Since the seal ring 13 is made up of a material excellent in self-lubricating property and sliding property such as carbon, even if the seal ring 13 is always relatively displaced with the holder side secondary sealing surface 11c during operation, it is possible to prevent wear, surface roughness, and the like, and it is possible to maintain the function of the secondary seal for a long time. Moreover, the seal ring 13 made up of a material with good sliding property contacts the biasing means 19 and the holder 11a, so even if the floating ring 15 is relatively displaced with respect to the biasing means 19, the floating ring 15 is not fixed to the biasing means 19 and the holder 11a, and the movement of the floating ring 15 is not restrained.

Hereinbefore, the embodiment of the present invention has been described with reference to the drawings, but the specific configuration is not limited to the embodiment. The present invention also includes any changes or additions made within a scope that does not depart from the spirit of the present invention.

For example, in the above embodiment, the floating ring 15 is integrally configured as an annular shape, but is not limited thereto, and the parts configured by being divided in the circumferential direction may be integrally assembled to an annular shape.

In the above embodiment, although the floating ring 15 is biased by the biasing means 19, the secondary seal may be configured by further adhering the seal ring side secondary sealing surface 13c and the holder side secondary sealing surface 11c by means of pressure from the high-pressure fluid side to the low-pressure fluid side without using the biasing means 19.

In the above embodiment, although the spiral foil 14 attached between the outer circumference 15b of the floating ring 15 and the inner circumferential wall 11d of the housing 11 is fixed in the circumferential direction by a frictional force due to an elastic repulsive force of the spiral foil 14 itself, an end part of the spiral foil 14 may be fixed to the outer circumference 15b of the floating ring 15 and the inner circumferential wall 11d of the housing 11.

Moreover, the present invention uses a seal device as a main purpose, but may be used as a damping device for damping vibration of a shaft.

### Reference Signs List

- 10: seal device
- 11: housing
- 11a: holder
- 11b: flange
- 12: retainer
- 13: seal ring
- 14: spiral foil
- 15: floating ring
- 19: biasing means
- 20: rotating shaft
- 21: casing
- 22: fastening means
- S: space
- h: gap (first gap)
- g: gap (second gap)

## Claims

1. A seal device for sealing between a housing and a rotating shaft which penetrates through the housing, the seal device being **characterized by**
including a floating ring arranged on the rotating shaft with a gap therebetween, and
being provided with a spiral foil arranged between the floating ring and the housing.

2. The seal device according to claim 1, **characterized in that** the spiral foil is formed into a multilayer.

3. The seal device according to claim 1 or 2, **characterized in that** a thickness of the spiral foil is less than or equal to 0.5 mm.
